# NEUE EUROPÄISCHE PATENTSCHRIFT

(11) **EP 2 643 610 B2**
(45) Veröffentlichungstag und Bekanntmachung des Hinweises auf die Entscheidung über den Einspruch: **27.02.2019**
(45) Hinweis auf die Patenterteilung: 25.11.2015
(21) Anmeldenummer: 10787296.2
(22) Anmeldetag: 26.11.2010
(51) Int. Cl.: F16D 65/14

(54) **SCHEIBENBREMSE**
DISK BRAKE
FREIN À DISQUE

(43) Veröffentlichungstag der Anmeldung: 02.10.2013
(73) Patentinhaber: Wabco Radbremsen GmbH, 68229 Mannheim (DE)
(72) Erfinder: KLOSS, Eugen, 64625 Bensheim (DE); LERCHL, Karl-Heinz, 64646 Heppenheim (DE); HARDER, Markus, 68766 Hockenheim (DE); GASTGEB, Christian, 68229 Mannheim (DE)
(74) Vertreter: Leinweber & Zimmermann
(86) Internationale Anmeldenummer: PCT/EP2010/007196
(87) Internationale Veröffentlichungsnummer: WO 2012/069069

(56) Entgegenhaltungen:
- EP-A1- 0 614 024
- EP-A1- 2 175 156
- EP-A1- 2 175 156
- DE-C1- 4 430 258
- DE-C1- 10 219 148
- US-E1- R E37 231

## Beschreibung

Die Erfindung betrifft eine Scheibenbremse für Nutzfahrzeuge, mit einem Bremssattel, einer Zuspanneinrichtung, die einen Drehhebel sowie eine an einem seiner Enden angebrachte Exzenter-Bremswelle aufweist, einer Druckverteilungseinrichtung, die mittels der Zuspanneinrichtung gegen die Vorspannkraft wenigstens einer Druckfeder zum Zuspannen verschieblich ist, und einer Betätigungseinrichtung, wobei der Drehhebel, die Bremswelle und die Druckfeder innerhalb des Bremssattels liegen und die Betätigungseinrichtung an dem Bremssattel angebracht ist und über eine Funktionsöffnung mit dem Drehhebel in Wirkverbindung steht. So eine gattungsgemäße Scheibenbremse geht z.B. aus EP-A-0 614 024 hervor.

Eine Scheibenbremse der oben genannten Art ist aus der DE 195 07 308 A1 bekannt. Bei der bekannten Bremse weist der die Bremsscheibe umgreifende Bremssattel einen der Bremsscheibe abgewandten offenen Sattelabschnitt auf, der mittels Verschraubungen mit einem Verschlußgehäuse verschlossen ist. Somit liegt auf einer Seite der Bremsscheibe ein geteilter Bremssattel vor, der in seinem Inneren die Zuspanneinrichtung mit zugehörigem Drehhebel aufnimmt. Das Verschlußgehäuse kann dabei im bremsscheibenabgewandten Bereich zwei Funktionsöffnungen aufweisen, durch die einerseits eine Betätigungseinrichtung, wie beispielsweise eine Kolbenstange eines Betätigungszylinders im Sinne einer Bremsbetätigung auf das Drehhebelende einwirken kann, und andererseits der Zugang zu einer im Bremssattel liegenden Nachstellvorrichtung gewährleistet ist. Ansonsten ist das Bremssattelende (Verschlußgehäuse) geschlossen.

Die Zuspanneinrichtung weist ein Druckverteilungselement auf, das im Bremssattel axial gegen die Vorspannkraft von wenigstens einer Druckfeder verschiebbar, aber wegen seiner Brückenform undrehbar gehalten ist. Bei einer Einspindelbremse weist das Druckverteilungselement mittig eine vermittels einer Nachstellvorrichtung einstellbaren/verlängerbaren Druckspindeleinrichtung auf. Über die Druckspindeleinrichtung wird wenigstens ein Bremsbelag gegen wenigstens eine Bremsscheibe gedrückt. Da das Druckverteilungselement durch wenigstens eine senkrecht auf der Bremsscheibenebene stehende Gleitfläche geführt und abgestützt ist, kann es mittels einer bremsscheibenabgewandten Lagerungsstruktur den bremsscheibenzugewandten Bereich einer mit einem Drehhebel versehenen Zuspannwelle tragen. Dadurch wird der Drehpunkt für die Zuspannwelle über das Druckverteilungselement festgelegt. Die Lagerung erfolgt beispielsweise zwischen dem Druckverteilungselement und der Zuspannwelle über sich längs erstreckende teilzylindrische Mantelflächen, wobei zur Lagerungsoptimierung noch Gleit- und oder Wälzlagerungen vorgesehen sein können.

Der Drehhebel ist beispielsweise einstückig mit der Zuspannwelle ausgeführt, wodurch sich beispielsweise die Form eines umgekehrten Y ergibt. Dabei greift beispielsweise am oberen Schenkel (Drehhebelende) des umgekehrten Y die oben bereits erwähnte Betätigungseinrichtung an. Die beiden unteren Schenkel sind wie oben beschrieben an dem Druckverteilungselement gelagert, und mittig erstreckt sich eine hier nicht näher zu erläuternde längenverstellbare Druckspindeleinrichtung durch die beiden unteren Schenkel des Y. Die Zuspannwelle erstreckt sich damit parallel zur Bremsscheibe und ist im Mittelbereich unterbrochen.

Damit bei Betätigung des Drehhebels in Richtung zur Bremsscheibe über die Zuspannwelle ein Andrücken des Bremsbelags gegen die Bremsscheibe erfolgt, weist die Zuspannwelle eine als Exzenter wirkende Nockenstruktur auf. Die Nockenstruktur ist so ausgebildet, daß sie an einer ebenen und sich parallel zur Bremsscheibe erstreckenden (ersten) Reaktionsfläche des Verschlußgehäuses anliegt bzw. sich daran abstützt. Weist die Zuspannwelle eine geschlossene Nockenstruktur auf, erfolgt eine direkte/unmittelbare Anlage. Weist die Zuspannwelle jedoch eine durch Rollen- oder Gleitkörper gebildete Nockenstruktur auf, ist die Zuspannwelle indirekt/mittelbar abgestützt.

In beiden Fällen erfolgt eine Anlage an der ebenen Reaktionsfläche entlang einer Linie. Entlang dieser Linie erfolgt auch die Abstützung. Bei einer Betätigung der Scheibenbremse mit der Einleitung von Zuspannkräften bewegt sich die Nockenstruktur in einer Auf-/Abwärtsbewegung entlang einem Abwälz- Gleit- oder Abrollbereich auf der zugehörigen Reaktionsfläche.

Da insbesondere im Nutzfahrzeugbereich mit diesen Bremsen sehr hohe Bremskräfte erzeugt werden müssen, sind Vorkehrungen zu treffen, daß insbesondere im Kontaktbereich der ersten Reaktionsfläche keine Schäden wie beispielsweise Kerben oder dergleichen durch die Nockenstruktur auftreten, weil solche Schäden zu Verspannungen des Drehhebels und zu überhöhten Lagerbelastungen führen können, wenn sich die Nockenstruktur entlang dieser Abstützflächen bewegen will/muß. Mithin wäre die Bremsfunktion auf Dauer gefährdet.

Um dies zu vermeiden, ist bei herkömmlichen Bremsen das die erste Reaktionsfläche aufweisende Verschlußgehäuse aus einem hochwertigen Werkstoff als Schmiedeteil hergestellt, wobei die Reaktionsflächen immer anschließenden Härte- und Schleifprozeduren unterzogen werden, um die erforderlichen Zuspannkräfte verschleißresistent aufnehmen zu können. Da die Reaktionsflächen zudem herstellungsbedingt relativ großflächig ausgeführt sein müssen, ist der Innenraum des Bremssattels überdies noch eingeschränkt, an den dann nachteilig die Innenteile dementsprechend anzupassen sind. Dies steht den Bestrebungen nach höheren Bremsenleistungen mit erforderlicher Teiledimensionierung unter Beibehaltung der äußeren Bremsenkontur entgegen.

Es versteht sich, daß bei diesen Materialien und anschließenden Bearbeitungsverfahren der Kosten- und Herstellungsaufwand, insbesondere bei hohen Serienstückzahlen, einer rationellen Fertigung der Scheibenbremse insgesamt entgegensteht.

Im Gegensatz zu dem Verschlußgehäuse ist der offene Sattelabschnitt beispielsweise aus einem Gußwerkstoff hergestellt.
Eine Scheibenbremse nach dem Oberbegriff von Anspruch 1 ist aus der EP 1 318 322 B1 bekannt.

Der Erfindung liegt die Aufgabe zugrunde, die Bremse der eingangs genannten Art derart weiterzubilden, daß ihre Zuverlässigkeit erhöht und gleichzeitig der Herstellungsaufwand verringert wird.

Erfindungsgemäß wird die gestellte Aufgabe mit einer Scheibenbremse nach Anspruch 1 gelöst.

Die DE 10 2005 058 209 A1 zeigt zwar auch eine Scheibenbremse, jedoch eines anderen Typs und für einen anderen Einsatzzweck. So handelt es sich beispielsweise nicht um eine Nutzfahrzeug-Scheibenbremse, sondern vielmehr um eine PKW-Scheibenbremse mit einem hydraulischen Bremskolben. Darüber hinaus ist ein Parkhebel vorgesehen, der nicht innerhalb des Bremssattels liegt. Der Parkhebel wird auch nicht mittels einer an dem Bremssattel angebrachten Betätigungseinrichtung betätigt, sondern vielmehr mittels eines Bremsdrahtes.

Die Herstellung des erfindungsgemäßen Zwischenstücks in Anpassung an die erste Ausnehmung ist sehr einfach. Ferner kann die Ausnehmung sehr einfach mittels Formfräsers hergestellt werden, weil der Formfräser vorzugsweise bereits der Ausnehmungskontur entspricht. Dennoch wird hohe Verläßlichkeit der erfindungsgemäßen Scheibenbremse erzielt, weil das Zwischenstück mit geringem Aufwand derart ausgestaltet sein kann, daß keine Schäden wie etwa Kerben oder dergleichen auftreten.

Erfindungsgemäß bevorzugt erstreckt sich ein kreisbogenförmiger Abschnitt der Kontur der ersten Ausnehmung über einen Winkel von mehr als 180°. Bei dieser Ausgestaltung hält die erste Ausnehmung das Zwischenstück, so daß es sich nicht translatorisch in einer Ebene parallel zur Bremsscheibenebene bewegen kann.

Dem gleichen Zwecke dient eine Sicherungseinrichtung zum Sichern des Zwischenstücks gegen eine Bewegung quer, insbesondere senkrecht zur Bremsenachse.

Dabei ist nach einer weiter bevorzugten Ausführungsform der Erfindung vorgesehen, daß ein Bereich, an dem sich die Zuspanneinrichtung an dem Zwischenstück abstützt, in Richtung der Bremsenachse gesehen nicht mit demjenigen Bereich überlappt, in dem die Sicherungseinrichtung ausgebildet ist. Durch diese Ausgestaltung ist die Gefahr gebannt, daß die Sicherungseinrichtung durch die in aller Regel erheblichen Bremsenzuspannkräfte beeinträchtigt wird.

Die Sicherungseinrichtung weist erfindungsgemäß einen Ansatz an dem Zwischenstück und eine zweite Ausnehmung an dem Sattel (oder umgekehrt) auf. Dadurch ist eine besonders einfache Art der Sicherungseinrichtung realisiert.

Der Ansatz kann erfindungsgemäß bevorzugt dabei exzentrisch zu dem kreisbogenförmigen Abschnitt der Kontur der ersten Ausnehmung liegen. Auf diese Weise dient der Ansatz nicht nur der Sicherung des Zwischenstücks gegen eine Bewegung quer zur Bremsscheibenachse, sondern gleichzeitig auch zum Sichern des Zwischenstücks gegen ein Drehen um den gedachten Mittelpunkt des kreisbogenförmigen Abschnitts der Kontur der ersten Ausnehmung.

Der Ansatz ist erfindungsgemäß weiter bevorzugt einstückig mit dem Zwischenstück ausgebildet. Wiederum dient dies der Vereinfachung.

Das Zwischenstück hat erfindungsgemäß weiter bevorzugt eine zu der Kontur der ersten Ausnehmung zumindest abschnittweise passende Kontur. Dadurch wird das Zwischenstück besonders verläßlich in der ersten Ausnehmung gehalten.

Das Zwischenstück hat erfindungsgemäß weiter bevorzugt eine zumindest abschnittweise kreisbogenförmige Kontur. Dadurch besteht die Möglichkeit, es an die erste Ausnehmung anzupassen.

Weiter bevorzugt hat das Zwischenstück eine abschnittweise gerade Kontur.

Eine Kombination aus geraden und kreisbogenförmigen Abschnitten der Kontur führt beispielsweise zu einer etwa halbmondförmigen Ausgestaltung des Zwischenstücks.

Erfindungsgemäß weiter bevorzugt ist vorgesehen, daß der gerade Abschnitt der Kontur des Zwischenstücks innerhalb eines durch Vervollständigen des Kreisbogenabschnitts entstehenden gedachten Kreises liegt. Mit anderen Worten ist das Zwischenstück nach dieser Ausgestaltung kleiner als in der Version eines Vollkreises. Dadurch können Material- und/oder Platzbedarf eingespart werden.

Nach einer besonders bevorzugten Ausführungsform der Erfindung erstreckt sich der Drehhebel zumindest abschnittweise in Zuspannrichtung gesehen hinter einer sein freies Ende mit der Drehachse der Bremswelle verbindenden geraden Linie.

Mit anderen Worten ist der Drehhebel nicht gerade, sondern weicht von der geraden Struktur insofern ab, als er sich hinter die genannte Linie erstreckt. Dadurch ist er länger als er wäre, würde er eine gerade Linie zwischen seinem freien Ende und der Drehachse der Bremswelle beschreiben. Dadurch ergibt sich die Möglichkeit, dem Drehhebel eine Kontur zu geben, die bei optimaler Platzausnutzung eine ebenso optimale Kraft- und Momenteinleitung sicherstellt.

Dabei ist der Drehhebel erfindungsgemäß weiter bevorzugt zumindest abschnittweise bogenförmig.

Er erstreckt sich nach dieser Ausführungsform der Erfindung also (zumindest abschnittweise) in einem Bogen, der in Zuspannrichtung gesehen hinter derjenigen geraden Linie liegt, die sein freies Ende mit der Drehachse der Bremswelle verbindet. Eine solche bogenförmige Ausgestaltung ist wiederum mechanisch besonders vorteilhaft und gleichzeitig platzsparend.

Dadurch, daß der Drehhebel von der sein freies Ende mit der Drehachse der Bremswelle verbindenden geraden Linie (insbesondere bogenförmig) in Zuspannrichtung gesehen nach hinten abweicht, erstreckt er sich näher an das Zwischenstück heran als in demjenigen Falle, wo er sich gerade zwischen der Bremswelle und seinem freien Ende erstreckt. Dadurch wird Bauraum gespart. Dennoch ist es aber erfindungsgemäß besonders bevorzugt vorgesehen, daß der Drehhebel in jeder Betriebsstellung einen Mindestabstand von dem Zwischenstück von 3 mm oder mehr hat, weiter bevorzugt 1 mm oder mehr.

Dadurch ist sichergestellt, daß der Drehhebel (im Gegensatz zur Bremswelle) das Zwischenstück in keiner Betriebsstellung berührt, um zu vermeiden, daß ein in der Endposition, also in der Ruhestellung, nicht definierter Betriebszustand auftritt.

Nach einer besonders bevorzugten Ausführungsform der Erfindung liegt eine Oberfläche des Zwischenstücks, an der sich die Zuspanneinrichtung in eingebautem Zustand abstützt, parallel zu einer Bremsscheibenebene.

Erfindungsgemäß ist weiter bevorzugt vorgesehen, daß ein die erste Ausnehmung aufweisender erster Abschnitt des Sattels ein Gußteil ist. Bei diesem Abschnitt kann es sich beispielsweise um das oben erwähnte Verschlußgehäuse handeln, das auf diese Weise einfacher und vor allem kostengünstiger hergestellt werden kann. Insbesondere ist es nicht mehr erforderlich, das Verschlußgehäuse als Schmiedeteil auszugestalten.

Der erste Abschnitt ist erfindungsgemäß weiter bevorzugt mittels Schrauben, die im Randbereich umfänglich angeordnet sind, an einem zweiten Abschnitt des Sattels befestigt.

Erfindungsgemäß weiter bevorzugt ist vorgesehen, daß der Drehhebel beim Bremsen mittels einer exzentrisch wirkenden Zuspannwelle gegen ein wenigstens eine längenverstellbare Druckspindeleinrichtung tragendes Druckverteilungselement drückt.

Dabei bestimmt weiter bevorzugt eine Lagerung zwischen dem Druckverteilungselement und der Zuspannwelle die Drehachse des Drehhebels.

Schließlich handelt es sich bei der erfindungsgemäßen Scheibenbremse um eine solche, die pneumatisch, elektromechanisch und/oder hydraulisch betätigt wird.

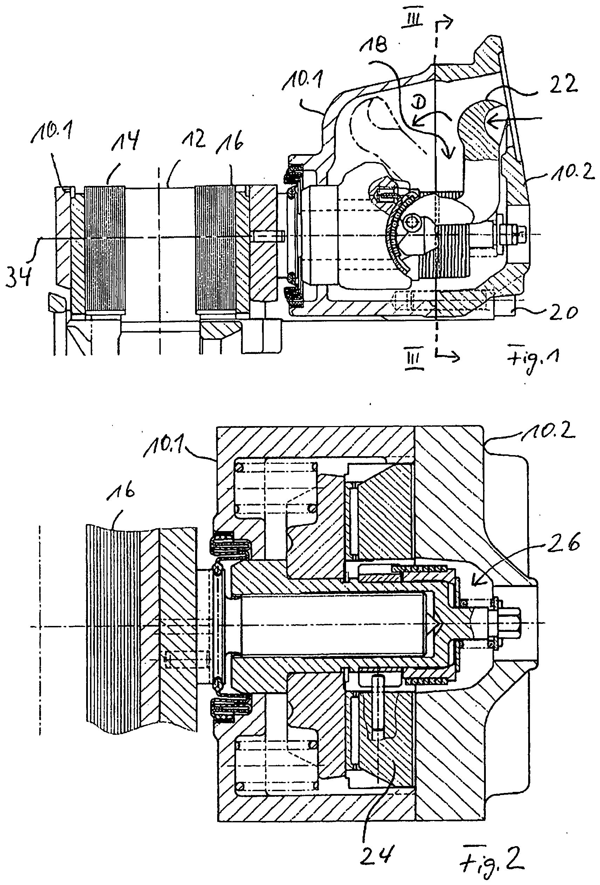

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Schnittansicht einer Scheibenbremse nach einem Ausführungsbeispiel der Erfindung,
- Figur 2: eine zu der Schnittansicht nach Figur 1 senkrechte Schnittansicht der Scheibenbremse,
- Figur 3: eine Ansicht entlang der Linie III-III in Figur 1, jedoch von einer herkömmlichen Scheibenbremse,
- Figur 4: die gleiche Ansicht wie Figur 3, jedoch von der Bremse nach den Figuren 1 und 2,
- Figur 5: ein Zwischenstück der Bremse nach den Figuren 1, 2 und 4,

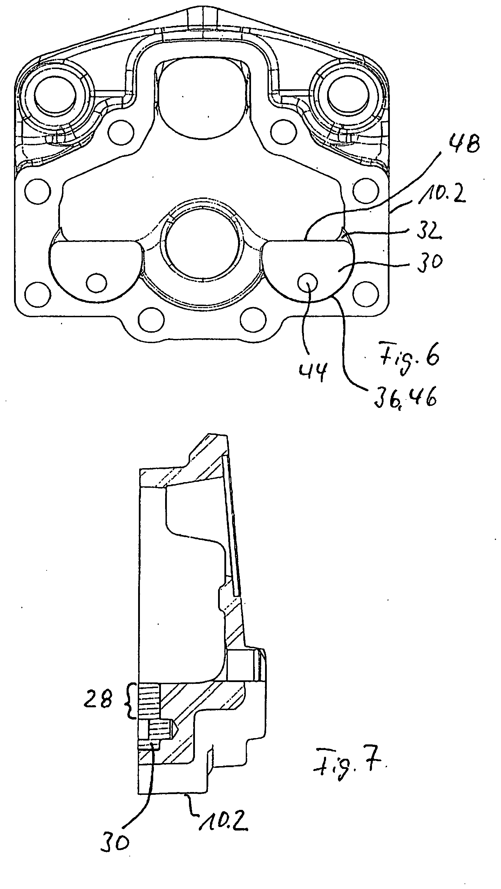

- Figur 6: die gleiche Ansicht wie Figur4,jedoch mit eingelegten Zwischenstücken,
- Figur 7: eine geschnittene Teilansicht der Bremse nach den Figuren 1 und 2 und
- Figur 8: eine schematische perspektivische Ansicht einer der Bremse nach den Figuren 1 bis 7 im Wesentlichen gleichen Bremse.

Bei der in der Zeichnung dargestellten Scheibenbremse handelt es sich um eine mechanische Scheibenbremse. Sie weist einen Bremssattel 10 auf, der in üblicher Weise mit seinen beiden Schenkeln eine Bremsscheibe 12 übergreift. Beidseits der Bremsscheibe 12 sind Bremsbeläge 14, 16 an Belagträgern in einem nicht dargestellten Bremsenträger bzw. im Bremssattel geführt und abgestützt. Der Bremssattel 10 kann als Gleitsattel in nicht näher dargestellter Weise mit Hilfe von Führungsmitteln quer zur Bremsscheibe 12 verschieblich gelagert sein. In seinem Inneren liegt eine Zuspanneinrichtung, die insgesamt mit der Bezugszahl 18 bezeichnet ist. Der Bremssattel 10 setzt sich bei dem dargestellten Ausführungsbeispiel aus zwei Teilen zusammen, nämlich einem offenen Sattelabschnitt 10.1 und einem Verschlußgehäuse 10.2, das mittels Schrauben 20, die im Randbereich umfänglich angeordnet sind, an dem offenen Sattelabschnitt 10.1 befestigt ist.

Zu der Zuspanneinrichtung gehören ein mittels einer über beispielsweise eine Kolbenstange eines nicht gezeigten Betätigungszylinders in Richtung D schwenkbarer Drehhebel 22 und eine Zuspannwelle 24 mit einem Nocken, der sich direkt oder indirekt an dem Verschlußgehäuse 10.2 abstützt. Das Verschlußgehäuse 10.2 weist im bremsscheibenabgewandten Bereich wenigstens eine Funktionsöffnung auf, die der Durchführung der genannten Kolbenstange dient.

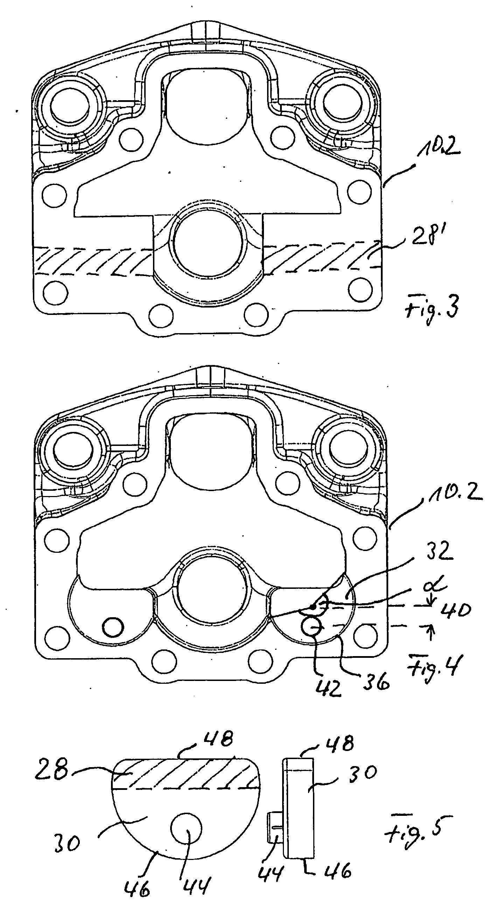

Figur 3 zeigt ein Verschlußgehäuse 10.2' einer herkömmlichen Scheibenbremse. Bei dieser herkömmlichen Scheibenbremse stützt sich die Zuspannwelle 24 in einem Abwälz-/Abrollbereich 28' linienförmig ab. Da der genannte Bereich 28' einstückig mit dem Verschlußgehäuse 10.2' ausgebildet ist, muß das gesamte Gehäuse aus einem hochwertigen Werkstoff als Schmiedeteil hergestellt sein und der genannte Bereich 28' muß besonderen Härte- und Schleifprozeduren unterzogen werden.

Nach dem in der Zeichnung dargestellten Ausführungsbeispiel der Erfindung liegt demgegenüber der Abwälz-/Abrollbereich 28 auf einem Zwischenstück 30, das in eine erste Ausnehmung 32 eingelegt wird. Genauer gesagt sind zwei solche Zwischenstücke vorgesehen, die in jeweils einer entsprechenden ersten Ausnehmung liegen. Der Einfachheit halber wird aber nur eine der beiden Seiten beschrieben.

Figur 4 zeigt eine Ansicht parallel zur Bremsenachse 34. In dieser Ansicht hat die erste Ausnehmung 32 eine Kontur mit einem kreisbogenförmigen Abschnitt 36, der sich über einen Winkel α von ca. 200° erstreckt. Bezüglich des gedachten Mittelpunkts 38 des kreisbogenförmigen Abschnitts 36 um eine Strecke 40 versetzt ist eine zweite Ausnehmung 42 vorgesehen. Die zweite Ausnehmung 42 dient zum Aufnehmen eines Ansatzes 44 an dem Zwischenstück 30. Die kreisbogenförmige Ausgestaltung des Abschnitts 36 über mehr als 180° sichert das Zwischenstück 30 bereits gegen translatorische Bewegungen in der Zeichenebene nach Figur 4. Der Ansatz 44 liefert zu dieser Sicherung noch einen weiteren Beitrag. Darüber hinaus sichert er gegen Drehen um den Mittelpunkt 38.

Da der Abwälz-/Abrollbereich 28 zur linienförmigen Abstützung der Nocken nicht an dem Verschlußgehäuse 10.2, sondern vielmehr an dem Zwischenstück 30 ausgebildet ist, muß das Verschlußgehäuse 10.2 nicht als Schmiedeteil ausgeführt und besonderen Nachbehandlungen unterzogen werden. Vielmehr genügt es, das Zwischenstück 30 entsprechend auszuführen.

Nicht zuletzt zur Materialersparnis ist das Zwischenstück 30 nicht als Vollkreis ausgeführt, sondern vielmehr etwa halbmondartig, wobei seine Kontur einen zu dem Abschnitt 36 der ersten Ausnehmung 32 passenden kreisbogenförmigen Abschnitt 46 und einen geraden Abschnitt 48 aufweist. Der gerade Abschnitt 48 liegt dabei innerhalb einer den kreisbogenförmigen Abschnitt 46 zum Vollkreis vervollständigenden Bogen, so daß die entsprechende Abflachung zu einer Materialeinsparung führt. Darüber hinaus sind die Platzverhältnisse im Bremssattel verbessert.

Der Ansatz 44 kann als Zapfenvorsprung ausgeformt, gepreßt oder separat hergestellt werden. Seine exzentrische Lage sowie die exzentrische Lage der zugehörigen zweiten Ausnehmung 42 resultieren in Vorteilen bei der automatischen Lageverbringung.

Die beschriebene Exzenterverbindung stellt darüber hinaus sicher, daß selbst bei einer offenen und nicht voll umgreifenden Lagerung des Zwischenstücks 30 in der ersten Ausnehmung 32 eine Relativbewegung /-verschiebung wirkungsvoll verhindert ist. Damit wird auch ein Gegenmoment auf die Zuspannwelle 24 ausgeübt, sollten bei Extrembelastungen im Volllastbereich kurzfristig elastische Teileverformungen auftreten.

Das Zwischenstück 30 wird mittels eines Härteprozesses behandelt, um für den Dauerbetrieb verschleißresistent zu sein. Eben so gut ist es auch möglich, das Zwischenstück aus einem hochfesten Keramikwerkstoff herzustellen.

Da die Kontaktflächen zwischen dem Zwischenstück 30 und der Ausnehmung 32 plan und vollflächig sind, liegen sie unmittelbar aneinander. Durchbiegungen sind dadurch ausgeschlossen. In Verbindung mit entsprechend der Bremsbelastung gewählter Materialdicke vom Zwischenstück sind dadurch Deformationen und Materialüberlastungen weitestgehend ausgeschlossen.

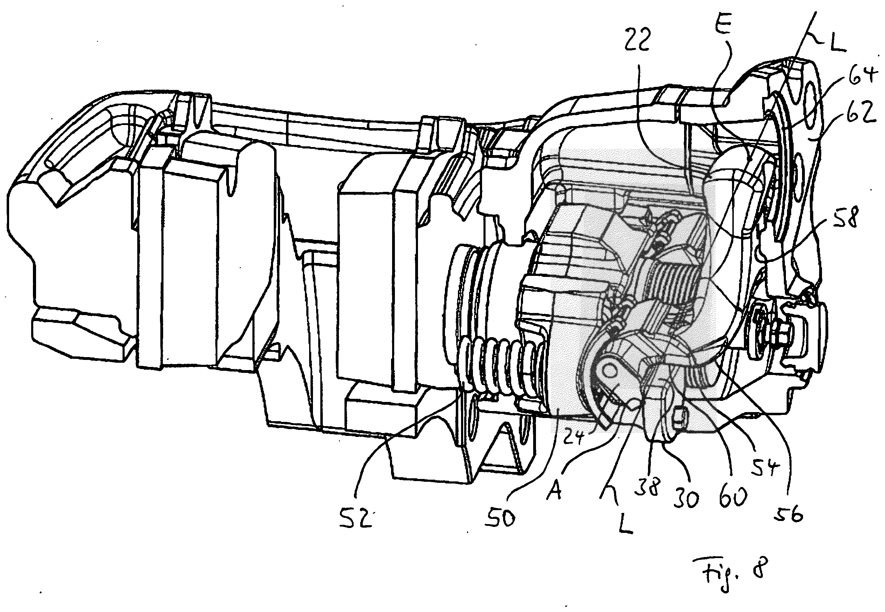

Wie insbesondere Figur 8 zu entnehmen ist, weist die Zuspanneinrichtung 18 ein als Druckverteilungseinrichtung dienendes Druckverteilungselement 50 auf, das axial gegen die Vorspannkraft einer im Bremssattel abgestützten Druckfeder 52 verschiebbar, aber wegen seiner Brückenform undrehbar gehalten ist. Da es sich bei der in der Zeichnung dargestellten Bremse um eine Einspindelbremse handelt, weist das Druckverteilungselement 50 mittig eine vermittels einer Nachstellvorrichtung einstellbare/verlängerbare Druckspindeleinrichtung 54 auf.

Der Drehhebel 22 ist bogenförmig und erstreckt sich insbesondere (in Drehrichtung gesehen) hinter einer Linie L, die die Drehachse A der Bremswelle 24 mit dem freien Ende E des Drehhebels 22 verbindet. Der Drehhebel 22 hat einen "Bauch" 56, der bogenförmig verläuft. In der Ruhestellung, d.h. bei nicht betätigter Bremse, liegt der Drehhebel 22 an einem Anschlag 58 des Sattels 10 an. In dieser Stellung hat derjenige Bereich des Drehhebels 22, der dem geraden Abschnitt 48 des Zwischenstücks 30 am nächsten liegt und der mit der Bezugszahl 60 bezeichnet ist, einen Abstand von 3 mm von dem geraden Abschnitt 48. Der Abstand kann auch geringer sein, beträgt aber mindestens 1 mm. Mit anderen Worten berührt der Drehhebel 22 das Zwischenstück 30 in keiner Betriebsstellung, wodurch vermieden ist, daß ein nicht definierter Betriebszustand auftritt.

Die Betätigung der in der Zeichnung dargestellten Bremse erfolgt mittels eines (in der Zeichnung nicht dargestellten) Pneumatik- oder Kombizylinders, der an einer Flanschfläche 62 des Sattels 10 angebracht wird und über eine Funktionsöffnung 64 mit dem Drehhebel 22 in Wirkverbindung steht.

Das in der Zeichnung dargestellte Ausführungsbeispiel stellt eine Einspindelscheibenbremse mit Gleitsattel dar. Grundsätzlich ist die Erfindung aber auch auf Zwei- oder Mehrspindelausführungen anwendbar. Dabei ist es gleichgültig, ob es sich um eine Gleit-, Fest- oder Pendelsattelscheibenbremse handelt, weil auch hier Reaktionskräfte auf den Bremssattel einwirken. Ebenso ist die Zwischenstücklagerung nicht nur auf einen verschraubten, also zweiteiligen Bremssattel anwendbar. Kommt ein geschlossener Gußbremssattel mit einer derartigen Zuspanneinrichtung mit entsprechender Zuspannwellenkontur zum Einsatz, kann die Herstellung nebst Verbringung auch durch eine beispielsweise der Bremsscheibe zugewandte Sattelöffnung erfolgen.

Schließlich sei noch darauf hingewiesen, daß die in der Zeichnung nicht dargestellte Betätigungseinrichtung für das erläuterte Ausführungsbeispiel pneumatisch arbeitet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse für Nutzfahrzeuge, mit
einem Bremssattel (10),
einer Zuspanneinrichtung (18), die einen Drehhebel (22) sowie eine an einem seiner Enden angebrachte Exzenter-Bremswelle (24) aufweist,
einer Druckverteilungseinrichtung (50), die mittels der Zuspanneinrichtung gegen die Vorspannkraft wenigstens einer Druckfeder (52) zum Zuspannen verschieblich ist, und
einer Betätigungseinrichtung, wobei
der Drehhebel, die Bremswelle und die Druckfeder innerhalb des Bremssattels liegen und
die Betätigungseinrichtung an dem Bremssattel angebracht ist und über eine Funktionsöffnung (64) mit dem Drehhebel in Wirkverbindung steht,
wobei
ein Bereich des Bremssattels, an dem sich die Bremswelle beim Zuspannen abstützt, innerhalb einer ersten Ausnehmung (32) liegt, die in einer Ansicht parallel zu der Bremsscheibenachse eine zumindest abschnittweise kreisbogenförmige Kontur hat, und
die Abstützung der Bremswelle an dem Bremssattel über ein zumindest teilweise in der ersten Ausnehmung aufgenommenes Zwischenstück (30) erfolgt,
**gekennzeichnet durch** eine Sicherungseinrichtung (42, 44) zum Sichern des Zwischenstücks (30) gegen eine Bewegung quer, insbesondere senkrecht zur Bremsenachse (34), wobei
die Sicherungseinrichtung einen Ansatz (44) an dem Zwischenstück (30) und eine zweite Ausnehmung (42) an dem Bremssattel (10) und/oder umgekehrt aufweist.

2. Scheibenbremse nach Anspruch 1, **dadurch gekennzeichnet, daß** sich ein kreisbogenförmiger Abschnitt (36) der Kontur der ersten Ausnehmung über einen Winkel (α) von mehr als 180° erstreckt.

3. Scheibenbremse nach Anspruch 1 oder 2, **dadurch gekennzeichnet, daß** ein Bereich (28), an dem sich die Zuspanneinrichtung (18) an dem Zwischenstück (30) abstützt, in Richtung der Bremsenachse (34) gesehen nicht mit demjenigen Bereich überlappt, in dem die Sicherungseinrichtung (42, 44) ausgebildet ist.

4. Scheibenbremse nach einem der vorangehenden Ansprüche, **dadurch gekennzeichnet, daß** der Ansatz (44) exzentrisch zu dem kreisbogenförmigen Abschnitt (36) der Kontur der ersten Ausnehmung liegt.

5. Scheibenbremse nach einem der vorangehenden Ansprüche, **dadurch gekennzeichnet, daß** der Ansatz (44) einstückig mit dem Zwischenstück (30) ausgebildet ist.

6. Scheibenbremse nach einem der vorangehenden Anspruche, **dadurch gekennzeichnet, daß** das Zwischenstück (30) eine zu der Kontur der ersten Ausnehmung (32) zumindest abschnittweise passende Kontur (46) hat.

7. Scheibenbremse nach einem der vorangehenden Ansprüche, **dadurch gekennzeichnet, daß** das Zwischenstück (30) eine zumindest abschnittweise kreisbogenförmige Kontur (46) hat.

8. Scheibenbremse nach einem der vorangehenden Ansprüche, **dadurch gekennzeichnet, daß** das Zwischenstück (30) eine abschnittweise gerade Kontur (48) hat.

9. Scheibenbremse nach Anspruch 8, **dadurch gekennzeichnet, daß** der gerade Abschnitt (48) der Kontur des Zwischenstücks (30) innerhalb eines durch Vervollständigen des Kreisbogenabschnitts (46) entstehenden gedachten Kreises liegt.

10. Scheibenbremse nach einem der vorangehenden Ansprüche, **dadurch gekennzeichnet, daß** der Drehhebel (22) sich zumindest abschnittweise in Zuspannrichtung gesehen hinter einer sein freies Ende (E) mit der Drehachse (A) der Bremswelle (24) verbindenden geraden Linie erstreckt.

11. Scheibenbremse nach einem der vorangehenden Ansprüche, **dadurch gekennzeichnet, daß** der Drehhebel (22) zumindest abschnittweise bogenförmig ist.

12. Scheibenbremse nach einem der vorangehenden Ansprüche, **dadurch gekennzeichnet, daß** der Drehhebel (22) in jeder Betriebsstellung einen Mindestabstand von dem Zwischenstück (30) von 3 mm oder mehr hat, bevorzugt 1 mm oder mehr.

13. Scheibenbremse nach einem der vorangehenden Ansprüche, **dadurch gekennzeichnet, daß** eine Oberfläche des Zwischenstücks (30), an der sich die Zuspanneinrichtung (18) in eingebautem Zustand abstützt, parallel zu einer Bremsscheibenebene liegt.

14. Scheibenbremse nach einem der vorangehenden Ansprüche, **dadurch gekennzeichnet, daß** ein die erste Ausnehmung (32) aufweisender erster Abschnitt (10.2) des Bremssattels (10) ein Gußteil ist.

15. Scheibenbremse nach Anspruch 14 **dadurch gekennzeichnet, daß** der erste Abschnitt (10.2) mittels Schrauben (20), die im Randbereich umfänglich angeordnet sind, an einem zweiten Abschnitt (10.1) des Bremssattels (10) befestigt ist.

16. Scheibenbremse nach einem der vorangehenden Ansprüche, **dadurch gekennzeichnet, daß** die Bremswelle (24) gegen ein wenigstens eine längenverstellbare Druckspindeleinrichtung tragendes Druckverteilungselement drückt.

17. Scheibenbremse nach Anspruch 16, **gekennzeichnet durch** eine die Drehachse des Drehhebels (22) bestimmende Lagerung zwischen dem Druckverteilungselement und der Bremswelle (24).

18. Scheibenbremse nach einem der vorangehenden Ansprüche, **dadurch gekennzeichnet, daß** sie pneumatisch, elektromechanisch und/oder hydraulisch betätigt wird, insbesondere mittels eines Pneumatik-Zylinders.

## Claims

1. Disc brake for utility vehicles, having
a brake caliper (10),
a brake-application device (18) which has a rotary lever (22) and an eccentric brake shaft (24) attached to one of the ends of said rotary lever,
a pressure-distributing device (50) which, for brake-application purposes, can be displaced counter to the preload force of at least one pressure spring (52) by means of the brake-application device, and
an actuating device, wherein
the rotary lever, the brake shaft and the pressure spring are situated within the brake caliper, and
the actuating device is attached to the brake caliper and is operatively connected to the rotary lever via a functional opening (64),
wherein
a region of the brake caliper against which the brake shaft is supported during brake-application events is situated within a first recess (32) which, in a view parallel to the brake disc axis, has a contour which is of circular arc-shaped form at least in sections, and
the support of the brake shaft on the brake caliper is realized via an intermediate piece (30) which is at least partially received in the first recess,
**characterized by** a securing device (42, 44) for securing the intermediate piece (30) so as to prevent the latter from moving transversely, in particular perpendicularly, with respect to the brake axis (34),
wherein
the securing device has a projection (44) on the intermediate piece (30) and a second recess (42) on the brake caliper (10), and/or vice versa.

2. Disc brake according to Claim 1, **characterized in that** a circular arc-shaped section (36) of the contour of the first recess extends over an angle (α) of greater than 180°.

3. Disc brake according to Claim 1 or 2, **characterized in that** a region (28) at which the brake-application device (18) is supported on the intermediate piece (30) does not, as viewed in the direction of the brake axis (34), overlap the region in which the securing device (42, 44) is formed.

4. Disc brake according to one of the preceding claims, **characterized in that** the projection (44) is situated eccentrically with respect to the circular arc-shaped section (36) of the contour of the first recess.

5. Disc brake according to one of the preceding claims, **characterized in that** the projection (44) is formed integrally with the intermediate piece (30).

6. Disc brake according to one of the preceding claims, **characterized in that** the intermediate piece (30) has a contour (46) which, at least in sections, matches the contour of the first recess (32).

7. Disc brake according to one of the preceding claims, **characterized in that** the intermediate piece (30) has a contour (46) which is of circular arc-shaped form at least in sections.

8. Disc brake according to one of the preceding claims, **characterized in that** the intermediate piece (30) has a contour (48) which is straight in sections.

9. Disc brake according to Claim 8, **characterized in that** the straight section (48) of the contour of the intermediate piece (30) is situated within an imaginary circle obtained by completing the circular arc-shaped section (46).

10. Disc brake according to one of the preceding claims, **characterized in that** the rotary lever (22) extends, at least in sections, and as viewed in the brake-application direction, behind a straight line which connects the free end (E) of said rotary lever to the axis of rotation (A) of the brake shaft (24).

11. Disc brake according to one of the preceding claims, **characterized in that** the rotary lever (22) is of arcuate form at least in sections.

12. Disc brake according to one of the preceding claims, **characterized in that** the rotary lever (22) has, in all operating positions, a minimum spacing from the intermediate piece (30) of 3 mm or greater, preferably 1 mm or greater.

13. Disc brake according to one of the preceding claims, **characterized in that** a surface of the intermediate piece (30) against which the brake-application device (18) is supported in the installed state lies parallel to a brake disc plane.

14. Disc brake according to one of the preceding claims, **characterized in that** a first section (10.2), which has the first recess (32), of the brake caliper (10) is a casting.

15. Disc brake according to Claim 14, **characterized in that** the first section (10.2) is fastened to a second section (10.1) of the brake caliper (10) by way of screws (20) which are arranged circumferentially in the edge region.

16. Disc brake according to one of the preceding claims, **characterized in that** the brake shaft (24) presses against a pressure-distributing element which bears at least one length-adjustable pressure spindle device.

17. Disc brake according to Claim 16, **characterized by** a bearing arrangement, which defines the axis of rotation of the rotary lever (22), between the pressure-distributing element and the brake shaft (24).

18. Disc brake according to one of the preceding claims, **characterized in that** said disc brake is actuated pneumatically, electromechanically and/or hydraulically, in particular by means of a pneumatic cylinder.

## Revendications

1. Frein à disque pour véhicules utilitaires, comprenant
un étrier de frein (10),
un dispositif de serrage (18) qui présente un levier rotatif (22) ainsi qu'un arbre de frein excentrique (24) monté à l'une de ses extrémités,
un dispositif de répartition de pression (50) qui peut être déplacé au moyen du dispositif de serrage à l'encontre de la force de précontrainte d'au moins un ressort de compression (52) en vue du serrage, et
un dispositif d'actionnement,
le levier rotatif, l'arbre de frein et le ressort de compression étant situés à l'intérieur de l'étrier de frein et
le dispositif d'actionnement étant monté sur l'étrier de frein et étant en liaison fonctionnelle avec le levier rotatif par le biais d'une ouverture fonctionnelle (64),
une région de l'étrier de frein, contre laquelle l'arbre de frein s'appuie lors du serrage, étant située à l'intérieur d'un premier évidement (32) qui, vu parallèlement à l'axe du disque de frein, présente un contour au moins en partie en forme d'arc de cercle, et
le support de l'arbre de frein sur l'étrier de frein s'effectuant par le biais d'un élément intermédiaire (30) reçu au moins en partie dans le premier évidement,
**caractérisé par** un dispositif de fixation (42, 44) pour fixer l'élément intermédiaire (30) à l'encontre d'un mouvement transversalement, notamment perpendiculairement, à l'axe du frein (34),
le dispositif de fixation présentant un épaulement (44) au niveau de l'élément intermédiaire (30) et un deuxième évidement (42) au niveau de l'étrier de frein (10) et/ou inversement.

2. Frein à disque selon la revendication 1, **caractérisé en ce qu'**une portion en forme d'arc de cercle (36) du contour du premier évidement s'étend sur un angle (a) supérieur à 180°.

3. Frein à disque selon la revendication 1 ou 2, **caractérisé en ce qu'**une région (28), au niveau de laquelle le dispositif de serrage (18) s'appuie contre l'élément intermédiaire (30), vu dans la direction de l'axe du frein (34), ne chevauche pas la région dans laquelle est réalisé le dispositif de fixation (42, 44).

4. Frein à disque selon l'une quelconque des revendications précédentes, **caractérisé en ce que** l'épaulement (44) est situé de manière excentrique par rapport à la portion en forme d'arc de cercle (36) du contour du premier évidement.

5. Frein à disque selon l'une quelconque des revendications précédentes, **caractérisé en ce que** l'épaulement (44) est réalisé d'une seule pièce avec l'élément intermédiaire (30).

6. Frein à disque selon l'une quelconque des revendications précédentes, **caractérisé en ce que** l'élément intermédiaire (30) présente un contour (46) s'adaptant au moins en partie au contour du premier évidement (32).

7. Frein à disque selon l'une quelconque des revendications précédentes, **caractérisé en ce que** l'élément intermédiaire (30) présente un contour au moins en partie en forme d'arc de cercle (46).

8. Frein à disque selon l'une quelconque des revendications précédentes, **caractérisé en ce que** l'élément intermédiaire (30) présente un contour partiellement droit (48).

9. Frein à disque selon la revendication 8, **caractérisé en ce que** la portion droite (48) du contour de l'élément intermédiaire (30) est située à l'intérieur d'un cercle imaginaire constitué par la complétion de la portion en arc de cercle (46).

10. Frein à disque selon l'une quelconque des revendications précédentes, **caractérisé en ce que** le levier rotatif (22) s'étend au moins en partie, vu dans la direction de serrage, derrière une ligne droite reliant son extrémité libre (E) à l'axe de rotation (A) de l'arbre de frein (24).

11. Frein à disque selon l'une quelconque des revendications précédentes, **caractérisé en ce que** le levier rotatif (22) est au moins en partie en forme d'arc.

12. Frein à disque selon l'une quelconque des revendications précédentes, **caractérisé en ce que** le levier rotatif (22), dans chaque position fonctionnelle, présente une distance minimale à l'élément intermédiaire (30) de 3 mm ou plus, de préférence de 1 mm ou plus.

13. Frein à disque selon l'une quelconque des revendications précédentes, **caractérisé en ce qu'**une surface de l'élément intermédiaire (30), contre laquelle s'appuie le dispositif de serrage (18) dans l'état installé, est située parallèlement à un plan du disque de frein.

14. Frein à disque selon l'une quelconque des revendications précédentes, **caractérisé en ce qu'**une première portion (10.2) de l'étrier de frein (10) présentant le premier évidement (32) est une partie moulée.

15. Frein à disque selon la revendication 14, **caractérisé en ce que** la première portion (10.2) est fixée à une deuxième portion (10.1) de l'étrier de frein (10) au moyen de vis (20), qui sont disposées sur la périphérie dans la région du bord.

16. Frein à disque selon l'une quelconque des revendications précédentes, **caractérisé en ce que** l'arbre de frein (24) presse contre un élément de répartition de pression portant au moins un dispositif de broche de pression réglable en longueur.

17. Frein à disque selon la revendication 16, **caractérisé par** un support sur palier définissant l'axe de rotation du levier rotatif (22) entre l'élément de répartition de pression et l'arbre de frein (24).

18. Frein à disque selon l'une quelconque des revendications précédentes, **caractérisé en ce qu'**il est commandé par voie pneumatique, électromécanique et/ou hydraulique, en particulier au moyen d'un cylindre pneumatique.
